# EUROPEAN PATENT APPLICATION

(11) **EP 4 283 439 A1**
(43) Date of publication of application: **29.11.2023**
(21) Application number: 22175361.9
(22) Date of filing: 25.05.2022
(51) Int. Cl.: G06F 3/01, G06F 3/04815

(54) **REDUCING SPATIAL CONFLICT BETWEEN A VIRTUAL OBJECT AND AN INDIVIDUAL**

(71) Applicant: Koninklijke Philips N.V., 5656 AG Eindhoven (NL)
(72) Inventor: TALGORN, Elise Claude Valentine, Eindhoven (NL); BUIL, Vincentius Paulus, Eindhoven (NL); HENDRIKS, Monique, 5656AG Eindhoven (NL); LAUTE, Niels, 5656AG Eindhoven (NL)
(74) Representative: Philips Intellectual Property & Standards

(57) **Abstract**

A mechanism for reducing a risk that a space occupied by a first virtual object for a first individual will be simultaneously occupied by a second individual. A user-perceptible output for the second individual and/or a position of the first virtual object is defined or changed responsive to the location of the first virtual object and the location of the second individual.

## Description

### FIELD OF THE INVENTION

The present invention relates to the field of virtual environments, and in particular to modifying a virtual environment.

### BACKGROUND OF THE INVENTION

There is an increasing interest in virtual environments for use in a number of use-case scenarios, such as clinical settings. In particular, providing a virtual representation of a real environment to an individual can be particularly helpful in allowing for the modification of an experience of the individual, e.g., to reduce stress or to provide information to an individual.

In particular, the virtual representation of the real environment can be modified by adding virtual objects or elements. Examples include plants, furniture, displays, virtual avatars, virtual pets, etc.

In this way, it is possible to perform one or more modifications to a virtual environment. The virtual environment is therefore is a modifiable virtual representation of a real environment. A virtual representation of the real environment may be the only environment visible to a user. In other examples, the virtual representation may overlay a view of the real environment (e.g., mixed reality).

There is an ongoing desire to improve the effectiveness of a virtual environment and to reduce a risk to individuals that are presented with a virtual environment.

### SUMMARY OF THE INVENTION

The invention is defined by the claims.

According to examples in accordance with an aspect of the invention, there is provided a computer-implemented method for mitigating an apparent spatial conflict between a first virtual object, which is visible to a first individual via a first user interface, and a second individual.

The computer-implemented method comprises: obtaining first virtual object information defining the location of the first virtual object; and obtaining second individual information defining at least a location and/or one or more expected locations of the second individual; and performing a conflict mitigation process comprising: controlling, via a second user interface, a user-perceptible output for the second individual responsive to the first virtual object information and the second individual information; and/or defining the location of the first virtual object responsive to the first virtual object information and the second individual information.

Proposed embodiments provide a mechanism for reducing a risk that a second individual will occupy a space that is (virtually) occupied by a first virtual object. In particular, a second individual can be prompted or notified (via a user-perceptible output) to the presence of the first virtual object and/or the first virtual can be moved out of the way of the second individual.

The proposed approach may make use of a determined location of the second individual in providing the user-perceptible output. In this way, a user-perceptible output may, for instance, warn or caution the second individual when they are near or are approaching the first virtual object. This approach provides reactive feedback to the second individual, to significantly reduce a likelihood that the second individual will occupy a same space as the first virtual object.

Similarly, the proposed approach makes use of the determined location of the second individual to define the location of the first virtual object. This approach reduces a likelihood of the second individual clashing with the first virtual object.

Approaches recognize that a clash between a virtual object and an individual can cause distress, distraction and/or annoyance to an individual associated with the virtual object. The proposed approaches make use of a location of another individual to reduce the chances of said individual spatially overlapping such a virtual object.

The proposed method can be performed for a plurality of first virtual objects and/or a plurality of second individuals.

The first individual and the second individual are different individuals to one another. For instance, the first individual may be a patient and the second individual may be a doctor or physician.

The first virtual object may not be visible to the second individual, via the second user interface. Put another way, the first virtual object may be a virtual object that is visible to the first individual, but is not visible to the second individual. Thus, the first virtual object may not be represented or provided at the second user interface. In some examples, the first virtual object may only be visible to the first individual, e.g., is only represented at the first user interface.

In the context of the present disclosure, the position or location of a virtual object is the perceived position or location of the virtual object to an individual viewing the virtual object via a user interface. The terms "position" and "location" are considered semantically identical and interchangeable.

The method may further comprise a step of obtaining an environment model, being a virtual representation of the real environment, wherein: the first virtual object information defines the location of the first virtual object with respect to the environment model; and the second individual information defines the location and/or the one or more expected locations of the second individual with respect to the environment model.

Thus, a model-based approach can be used in controlling the location of the first virtual object and/or the user-perceptible output to the second individual. A model-based approach provides a reliable and efficient mechanism for comparing the relative locations of the first virtual object and the location of the second individual, for improved efficiency of processing.

The step of controlling a user-perceptible output may comprise, if performed, controlling or defining the location of a second virtual object, visible to the second individual via the second user interface, responsive to the first virtual object information and the second individual information.

Thus, the second individual may be associated with a second virtual object. Appropriate positioning of the second virtual object can be used to guide or encourage the second individual away from the location of the first virtual object. This provides an intuitive and elegant mechanism for reducing a risk that the second individual will spatially clash with the first virtual object.

The second virtual object may be an object that is not visible to the first individual, e.g., is not represented at the first user interface. This advantageously avoids apparent overlap to the first user of two virtual objects. In some examples, the second virtual object may only be visible to the second individual, e.g., is only represented at the second user interface.

In particular examples, the step of controlling the user-perceptible output comprises controlling a location of the second virtual object to be positioned at or above the location of the first virtual object.

This approach recognizes that a second individual is unlikely to enter a space occupied by a virtual object that is visible to them. By placing the second virtual object at the location of the first virtual object, the risk that the second individual will attempt to enter the space occupied by the first virtual object is thereby reduced.

In some examples, the step of controlling the user-perceptible output comprises controlling a location of the second virtual object to be positioned between the location of the first virtual object and the location and/or one or more expected locations of the second individual.

This approach also recognizes that an individual is unlikely to try moving through a virtual object that is visible to them. By positioning the second virtual object between the location of the first virtual object and the second individual, the chance that the second individual attempts to move towards the first virtual object is reduced, thereby reducing the likelihood that there will be a spatial conflict between the second individual and the first virtual object

The method may comprise obtaining privacy information defining whether or not the second individual is permitted to view the first virtual object; and responsive to the privacy information indicating that the second individual is not permitted to view the first virtual object, preventing the second virtual object from having the appearance of the first virtual object.

This embodiment appreciates that virtual objects may be personal or specific to the individual for whom the virtual objects have been created. By preventing the second virtual object from having the appearance of the first virtual object (if the second individual is not permitted to view the first virtual object), then the second individual can still be alerted to the presence or existence of the first virtual object without violating a privacy of the first individual.

The second virtual object may, for instance, be a specifically created virtual object having a different shape or form compared to the first virtual object. Such a second virtual object may be placed at the same location as the first virtual object, but only visible to the second individual. This reduces a likelihood that the second individual will 'step on' or otherwise spatially overlap the first virtual object, or place a shared virtual object (e.g., visible to the first and second individuals) or a real object over the first virtual object.

In other examples, the second virtual object may be an virtual object that has already been generated for the second individual, e.g., a virtual object that can only be perceived by the second individual (via the second user interface).

In some examples, the step of controlling a user-perceptible output comprises controlling or defining the position of a virtual path overlay visible to the second individual via the second user interface responsive to the first virtual object information and the second individual information. A virtual path overlay may be or provide a virtual indication of a potential path or route for the second individual, e.g., a recommendation of a path or route that should be taken by the second individual when moving through the real environment. The virtual path overlay may also and/or otherwise be or provide a visual indication of potential paths or routes for the second individual that should be avoided by the second individual.

In this way, the second individual may be guided as to suitable routes or paths that can be taken to avoid spatial overlap with an apparent position or location of the first virtual object.

The step of controlling the user-perceptible output optionally comprises controlling a location of the virtual path overlay to be positioned to avoid the location of the first virtual object. This embodiment significantly reduces a likelihood of the second individual spatially clashing with the first virtual object, as the second individual will be more likely to move along a path that avoids the first virtual object. This approach also provides the second individual with an understanding of an area free of the first virtual object.

In some embodiments, if performed, the step of defining the location of the first virtual object comprises controlling the location of the first virtual object to avoid the location or one or more expected locations of the second individual. This approach significantly reduces the likelihood of the first virtual object and the second individual spatially clashing. In particular examples, if the first virtual object is a moving object (such as a virtual pet), controlling the location of the first virtual object may comprise controlling a path or movement of the first virtual object to avoid the location or one or more expected locations of the second individual.

In some examples, the second individual information comprises the location of the second individual. The step of defining the location of the first virtual object may comprise: processing the location of the second individual to determine an expected path of the second individual; and controlling the location of the first virtual object to avoid the expected path of the second individual. This approach anticipates a movement of the second individual, and keeps the first virtual object out of the way of the anticipated movement, reducing a likelihood of a spatial clash.

Controlling the location of the first virtual object may comprise controlling a path or movement of the first virtual object to avoid the expected path of the second individual. This approach recognizes that the first virtual object may also want to move, and that it is possible to plan a movement path for the first virtual object to avoid clashing with the second individual or an expected path of the second individual.

The method may further comprise obtaining first individual information defining at least a location and/or one or more expected locations of the first individual.

The step of defining the location of the first virtual object may comprise defining the location of the first virtual object to avoid any location between the location and/or one or more expected locations of the first individual and the location and/or one or more expected locations of the second individual.

This approach advantageously ensures that there is a line of sight from the first individual to the second individual. Line-of-sight is important in a wide number of settings and scenarios to ensure effective communication between the two individuals, and avoid or reduce a chance of interruption or misunderstanding.

The method may further comprise obtaining third virtual object information defining the location of a third virtual object visible to the first individual via the first user interface and to the second individual via the second user interface. The step of defining the location of the first virtual object may further comprise defining the location of the first virtual object to avoid the location of the third virtual object. The step of controlling, via a second user interface, a user-perceptible output may be further responsive to the third virtual object information.

In some examples, the step of controlling a user-perceptible output for the second individual comprises: processing the first virtual object information and the second individual information to determine a proximity of the second individual to the first virtual object; and controlling a user-perceptible output for the second individual responsive to the determined proximity.

This approach controls the user-perceptible output based on the proximity of the second individual to the first virtual object. This approach thereby proposes an approach of active feedback for the second individual as they approach the first virtual object, thereby reducing a chance that the second individual will enter a space (virtually) occupied by the first virtual object.

There is also proposed a computer program product comprising computer program code means which, when executed on a computing device having a processing system, cause the processing system to perform all of the steps of any herein described method.

There is also proposed a processing system for mitigating an apparent spatial conflict between a first virtual object, which is visible to a first individual via a first user interface, and a second individual. The processing system is configured to: obtain first virtual object information defining the location of the first virtual object; and obtain second individual information defining at least a location and/or one or more expected locations of the second individual; and perform a conflict mitigation process. The conflict mitigation process comprises: controlling, via a second user interface, a user-perceptible output for the second individual responsive to the first virtual object information and the second individual information; and/or defining the location of the first virtual object responsive to the first virtual object information and the second individual information.

There is also proposed a user interface system comprising: the processing system; the first user interface; and the second user interface.

Any advantages of the computer-implemented method according to the present invention analogously and similarly apply to the system and computer program herein disclosed. It will be appreciated by those skilled in the art that two or more of the above-mentioned options, implementations, and/or aspects of the invention may be combined in any way deemed useful.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a user interface system; and
Fig. 2 illustrates a method according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for reducing a risk that a space occupied by a first virtual object for a first individual will be simultaneously occupied by a second individual. A user-perceptible output for the second individual and/or a position of the first virtual object is defined or changed responsive to the location of the first virtual object and the location of the second individual.

Approaches rely upon the identification that a second individual occupying a same space as a first virtual object for a first individual will disturb and/or distress the first individual. By moving the first virtual object, or alerting the second individual to the presence of the first virtual object, the risk of a spatial conflict can be reduced.

Embodiments can be applied in any scenario in which a virtual environment including at least a first virtual object is visually represented to one or more individuals, but find particular use in medical scenarios, which can employ virtual environments to enhance the information available to a clinician or improve a comfort of a patient.

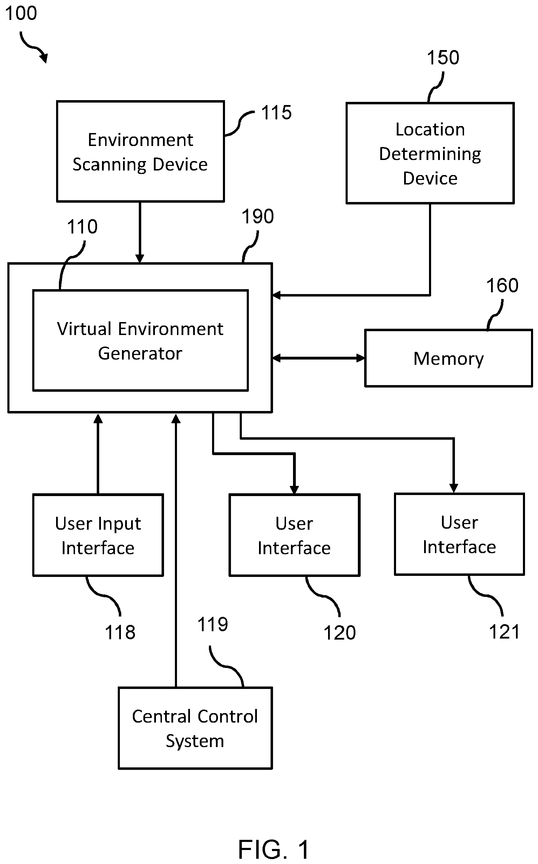

Fig. 1 illustrates a user interface system 100 according to an embodiment.

The user interface system 100 comprises a virtual environment generator 110 configured to generate at least one virtual environment. A virtual environment is a modifiable virtual representation of a real environment. For instance, the virtual environment may be represented by or comprise an environment model, being a computer-storable 3D model of the real environment.

Thus, the virtual environment generator 110 may be configured to construct an environment model. This model describes the layout of the environment (walls, doors, floors, ceilings), the objects (e.g. furniture) within it, and may further define the properties or appearance (e.g., color, texture and so on) for the various objects.

Approaches for generating a virtual environment that represents a real environment are well established, and make use of conventional 3D scanning techniques, such as photogrammetry, time-of-flight, LIDAR and so on. Such approaches are well established in the art, and are not described in detail for the sake of conciseness.

Accordingly, the user interface system may comprise an environment scanning device 115. The environment scanning device is configured to generate data or information that can be used to contrast a virtual representation of a real environment. Suitable data includes stereo images (e.g., for use in photogrammetry approaches), time-of-flight or depth data, structured light response data, LIDAR data and so on.

The virtual environment generator 110 may be formed from any suitable circuitry, hardware or software capable of processing data to construct an environment model in a digital domain. The environment scanning device 115 may be formed from any suitable scanning equipment, e.g., emitter and sensor combination, for generating data suited for constructing a model in a digital domain. Examples include: an array of light emitting elements and a time-of-flight sensor; a LIDAR scanner; a stereo/binocular pair of cameras; a modulated light emitter and sensor and so on.

The virtual environment generator 110 and the environment scanning device 115 thereby together form a 3D scanner. Examples of 3D scanners include modulated light 3D scanners, LIDAR scanners, time-of-flight scanners and so on.

The virtual environment generator 110 may be configured to supplement the virtual environment with one or more virtual elements or objects, i.e., elements or objects that do not have a true or real counterpart in the real environment (e.g., a virtual pet). It is possible to define the location of any such virtual objects with respect to the environment model, to effectively simulate or model where the virtual object(s) would be if they existed in real-life, i.e., in the real environment.

The shape, structure and color of the virtual object(s) can vary. Examples of suitable virtual objects include plants, furniture, displays, virtual avatars, virtual pets, etc.

The virtual environment generator 110 may be configured to supplement the virtual environment with one or more virtual objects, responsive to a user input provided at a user input interface 118. This allows a user or individual to control the content of the virtual environment. By way of example, a user may add a virtual object to the virtual environment, so that a visual representation of the virtual object is provided to the individual at a user interface.

Suitable examples of user input interfaces 118 are known in the art, including any suitable input peripheral for a processing system (e.g., mouse, keyboard, touch-sensitive surface etc.).

In some embodiments, the virtual environment generator 110 may be configured to modify the virtual environment, e.g., supplement the virtual environment with one or more virtual objects, responsive to a central command provided by a central control system 119. The central control system 119 may, for instance, comprise a database or memory storage unit defining or containing a set of rules for defining modifications to be made to a virtual environment for the individual. The set of rules may, for instance, define the modifications based on an identity, role, or other characteristic(s) of the individual to whom the virtual environment is to be visually represented.

A user interface 120, 121 of the system 100 is configured to display a visual representation of at least the virtual objects supplementing the virtual environment to an/the individual, e.g., to ensure the individual perceives or views all elements found in the virtual environment. In particular, the virtual objects may be rendered (e.g., by the virtual environment generator 110) and the user interface 120, 121 may provide a visual representation of the rendering.

Various approaches for presenting or displaying one or more virtual objects to an individual are well known in the art, and include providing a screen with a rendering of the virtual objects and/or projecting the virtual objects into the eye(s) of the individual. These approaches are able to position the virtual objects to lie at defined locations, e.g., locations defined with respect to the environment model. Thus, the user interface 120, 121 may comprise a screen and/or a projection system.

In some examples, the user interface may provide a full rendering of the environment model and the virtual object(s) for the individual, such that the virtual environment is the only environment visible to the individual. For instance, the individual may wear an enclosed headset that provides a rendering of the virtual environment (and any virtual objects) to the individual. This technique is commonly called virtual reality or full virtual reality. For this technique, the user interface 121, 122 may comprise the enclosed headset that completely surrounds at least the eyes of the individual or user of the user interface.

In other examples, the virtual representation may overlay a view of the real environment (e.g., mixed reality). In this scenario, the environment model does not need to be fully rendered (as the real environment already represents the environment model of the virtual environment). Thus, the rendering may comprise only the virtual object(s) and, if present, any modifications to the environment model that differ from the real environment. This technique is commonly called augmented reality or mixed reality.

For instance, the individual may wear smartglasses, a headset (or any other similar device) that supplement the user's vision with overlays and/or additional information. Thus, the user interface 120, 121 may comprise smartglasses, a headset or similar products. Examples of suitable products that can provide such mixed reality include the Hololens ^{®} device produced by Microsoft Corporation, or the Varjo ^{®} XR range of headsets.

It will be appreciated that, if there is a plurality of user interfaces 120, 121, then a plurality of different virtual environments can be created (e.g., a different virtual environment for each user interface and therefore each user/individual). Thus, for instance, there may be at least a first user interface 120 for a first individual and a second user interface 121 for a second individual.

In this way, different virtual environments can be created or otherwise defined for different users. Each virtual environment may, for instance, share a same environment model (which represents the real environment), but have one or more different modifications or supplementary features. In some examples, different virtual environments may contain different sets of one or more virtual objects, such that virtual objects that are visible to a first individual via a first user interface may not be visible to a second individual via a second user interface.

Thus, a collection of virtual objects for a particular environment or environment model can be defined, identifying which individual(s) are permitted to view each virtual object. Each virtual object can therefore be annotated or associated with information about which (type of) individuals can see the virtual object via their user interfaces, e.g., whether the object is shared or private. The virtual environment generator 110 is configured such that each individual sees (via a respective user interface) his owned virtual objects, plus the virtual content objects shared to him by other users in the same room. This can be presented using an augmented or mixed reality approach (in which the environment model is not rendered) and/or a virtual reality approach (in which the environment model is rendered).

The collection of virtual objects may, for instance, be stored and maintained by the central control system 119 or memory 160.

The present invention relates to an approach that aims to reduce a potential spatial conflict between a virtual object, or virtual objects, that are visible to a first individual via a first user interface and a second individual.

The proposed approaches recognize that the virtual environment, particularly the virtual object(s) of a virtual environment, that is/are visible to one individual may not be fully visible to another user. This may be for reasons of privacy, or simply irrelevance of the virtual object to another individual. It is recognized that an individual can become disturbed or interrupted if another individual appears to occupy a same spatial space as a virtual object. For instance, it might be awkward if a doctor would appear to step on the virtual pet of a patient or stand at the spot occupied by a virtual plant.

Thus, because an individual may not be aware of the virtual objects visible to another individual, there is an increased risk of an apparent spatial conflict between said individual and a first virtual object (which is visible the other individual). There is a desire to reduce this apparent virtual conflict.

The proposed mechanism thereby provides an approach or solution to avoid conflicts or clashes between virtual spatial overlays of one or more individuals and the physical presence of one or more other individuals in an elegant and natural way.

In the context of the present invention, providing a virtual object to an individual via a user interface comprises providing a visual representation of the virtual object. The visual representation of the virtual object is configured to be positioned (to the perception of the individual to whom the virtual objects are provided) at a particular and/or controllable location in the real environment for a mixed-reality approach or a rendering of a virtual environment for a full virtual reality approach. Approaches for appropriately rendering and displaying a virtual object such that it is perceived to be at a particular location in a real/virtual environment are well-established in the art of virtual reality, and are not described for the sake of conciseness.

Thus, in the context of the present disclosure, the position of a virtual object is the perceived position of the virtual object to an individual viewing the virtual object via a user interface.

Generally, if two individuals view the same virtual object via two different user interfaces, the perceived position of the virtual object is the same. Approaches for achieving this are well-known in the art of virtual/mixed reality techniques.

Embodiments propose a processing system 190 for performing such a mechanism or process.

The virtual environment generator 110 may, as illustrated, form a module of this processing system 190. Alternatively, the processing system may be a separate and distinct element to the virtual environment generator 110.

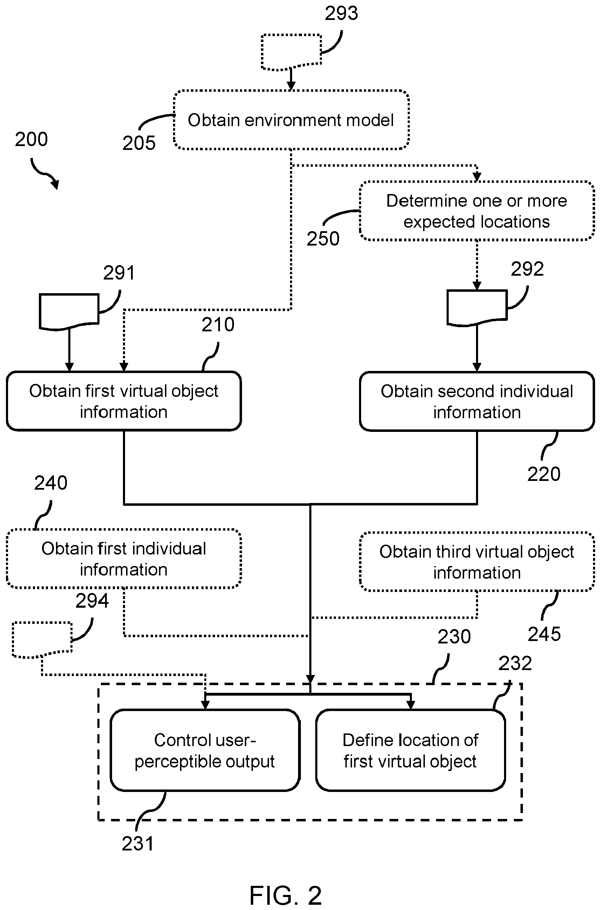

Fig. 2 illustrates a method 200 performed by the processing system 190. Continued reference is made, where relevant, to the system 100 illustrated in Fig. 1.

The method 200 is designed for mitigating an apparent spatial conflict between a first virtual object, which is visible to a first individual via a first user interface, and a second individual. The first virtual object may be a virtual object found in a virtual environment presented or displayed to a user, approaches for which have been previously described.

The described method 200 makes use of an environment model. As previously explained, an environment model is a virtual representation of the real environment, here: a real environment in the vicinity of the first and second individuals. Thus, the first virtual object information may effectively define the location of any virtual objects (for the first individual) in the environment model.

The environment model can thereby effectively define a model space. A model space/domain defines a virtual co-ordinate system that represents a real space (e.g., is proportional to a real space). The virtual environment can be defined within this virtual co-ordinate space.

The method 200 comprises a step 210 of obtaining first virtual object information 291 defining the location of the first virtual object.

The first virtual object information may, for instance, identify the relative location of the first virtual object with respect to a/the environment model.

The method 200 also comprises a step 220 of obtaining second individual information 292 defining a location and/or one or more expected locations of the second individual.

In a similar manner to the first virtual object information, the location or expected location(s) may similarly be defined with respect to the environment model. Thus, any such location may effectively be comprise a model-space location.

Approaches for determining an individual's location with respect to an environment model (i.e., in a model space) are well established. For instance, a simultaneous localization and mapping (SLAM) mechanism could be used to establish the position of the second individual with respect to the environment model. Another approach maps a tracked location of the second individual to a location of the environment model.

Thus, referring back to Fig. 1, the user interface system 100 may comprise a location determining device 150 for generating the second individual information (which is provided to the processing system 190 that performs method 200). Any suitable location determining device 150 can be used, such as an SLAM device or location tracker (e.g., employing image processing techniques and/or device tracking techniques that employ GPS or trilateration for determining a position of a device carried by an individual).

Approaches for determining an expected location or locations of an individual, e.g., with respect to the environment model, will be later described for improved contextual understanding.

Turning back to Fig. 2, the method 200 also comprises performing a conflict mitigation process 230. The conflict mitigation process uses the first virtual object information and the second individual information to perform one or more actions that reduce, to the perception of the first individual to whom the first virtual object is visible via the first user interface, the risk of an apparent spatial conflict between the second individual and the first virtual object.

The conflict mitigation process 230 may comprise performing a step 231 and/or a step 232.

Step 231 comprises controlling, via a second user interface, a user-perceptible output for the second individual responsive to the first virtual object information and the second individual information.

The user-perceptible output may, for instance, warn or caution the second individual when they are near or are approaching the first virtual object, i.e., when the location of the second individual is within a predetermined range of the location of the first virtual object.

This approach provides reactive feedback to the second individual, to significantly reduce a likelihood that the second individual will occupy a same space as the first virtual object.

Step 232 comprises defining the location of the first virtual object responsive to the first virtual object information and the second individual information. Thus, the perceived location or position of the first virtual object may be changed or modified responsive to the information obtained in steps 210 and 220. For instance, the first virtual object may be moved to avoid the location (or expected location(s)) of the second individual. This will significantly reduce a likelihood that the second individual will appear to interact with, or otherwise occupy a same space as, the first virtual object.

It will be appreciated that the method 200 may be repeated or be otherwise adapted for use with two or more instances of a first virtual object (e.g., different virtual objects visible to the first individual via the first user interface. For instance, step 210 may be adapted to obtain first virtual object information for a plurality of instances of first virtual objects, and mitigation process 230 may be performed for each instance of the first virtual object.

It is noted that once the skilled person is taught that the risk of an apparent spatial conflict between a first virtual object (for a first individual) and a second individual can be mitigated or reduced using first virtual object information and second individual information, then a large number of approaches for carrying out process 230 will become apparent. The present disclosure provides a non-exhaustive number of examples for carrying out step/process 230.

It has previously been explained how the first virtual object information and the second individual information may define their location(s) with respect to an environment model.

Accordingly, method 200 may comprise a step 205 of obtaining or receiving an environment model 293. The environment model may be generated, for instance, by the virtual environment generator 110. Step 205 may comprise receiving the environment model from the virtual environment generator 110 and/or retrieving the environment model from a memory 160 or storage unit to which the virtual environment generator has stored the environment model.

One example for performing step 231 has been previously described. Various other examples for performing step 231 are hereafter described.

In some embodiments, step 231 comprises controlling or defining the location of a second virtual object, visible to the second individual via the second user interface, responsive to the first virtual object information and the second individual information.

The second virtual object may be controlled to have a location that is positioned at or above the location of the first virtual object. This approach recognizes that the second individual is unlikely to occupy a space occupied by a virtual object that is visible to them. Thus, by placing a second virtual object (visible to the second individual) at the location of the first virtual object, a risk that the individual will attempt to enter the space apparently occupied by the first virtual object (according to the first individual's perception) is reduced.

In some examples, the second virtual object may be controlled to have a location that is positioned between the location of the first virtual object and the location (or expected location(s)) of the second individual. This approach recognizes that an individual is unlikely to try walking or moving through a virtual object that is visible to them, reducing a likelihood that they will move towards the first virtual object, and thereby reducing a risk that they will attempt to enter the space apparently occupied by the first virtual object (according to the first individual's perception).

In some examples, step 231 comprises a sub-step of obtaining privacy information 294 defining whether or not the second individual is permitted to view the first virtual object. Responsive to the privacy information indicating that the second individual is not permitted to view the first virtual object, the second virtual object may be prevented from having the appearance of the first virtual object. Rather, the second virtual object may have a different appearance.

The privacy information 294 may, for instance, be provided by the central control system 119 and/or the user interface 118.

This approach recognizes that virtual objects may be personal to the individual for whom the virtual objects have been created. In particular, there may only be a subset of individuals (e.g., not all individuals) who may be permitted to view a particular virtual object. A suitable example is a medical chart or form for an individual. By preventing the second virtual object from having the appearance of the first virtual object, the second individual can still be prompted or encouraged to avoid a space occupied by the first virtual object (using proposed approaches) without being made aware of the precise nature or content of the first virtual object.

The second virtual object may, for instance, be a desired virtual object for the second individual, i.e., a virtual object that would be presented to the second individual even in the absence or non-existence of the first virtual object. A suitable example is a virtual assistant for the second individual. This approach provides a more natural mechanism for reducing a risk of the second individual occupying a same space as the first virtual object. This approach can be considered to provide "integrated prevention".

In another example, the second virtual object may be a dedicated virtual object representing the existence of the first virtual object. By way of example, a box, block or column that occupies the location of the first virtual object, e.g., of a predetermined color such as red or the like. Another example would be a virtual object representing an abstraction of the other user's private virtual content, e.g., a labelled box (e.g., a box labelled "virtual pet" if the first virtual object is a virtual pet). This approach reduces a likelihood that the second individual will occupy a same space as the first virtual object, as they will be made specifically aware of the existence of the first virtual object. This approach can be considered as a "conscious warning".

In yet another example, the second virtual object may be a generic virtual object, unrelated to the (e.g., desires of the) first or second individual. An example includes a virtual object such as a plant or other decorative item.

In preferred examples, the second virtual object may only be made visible to the second individual (via the second user interface) when they are near the location of the first virtual object. This can be achieved by tracking the location of the second individual with respect to the environment model, and identifying when the location of the second individual is within a predetermined range of the location of the first virtual object with respect to the environment model. The predetermined range may, for instance, be a range representing 1m, 2m or 3m. Other suitable examples will be apparent to the skilled person.

This provides one example of how the user-perceptible output may be controlled responsive to a determined proximity between the second individual and the first virtual object. Thus, the step of controlling a user-perceptible output for the second individual may comprise: processing the first virtual object information and the second individual information to determine a proximity of the second individual to any virtual object space; and controlling a user-perceptible output for the second individual responsive to the determined proximity.

In some embodiments, step 231 may controlling or defining the position of a virtual path overlay visible to the second individual via the second user interface responsive to the first virtual object information and the second individual information. A virtual path overlay may indicate a path or route for the second individual, e.g., recommending a path or route that should be taken by the second individual when moving through the real environment.

In some examples, the step of controlling the user-perceptible output comprises controlling a location of the virtual path overlay to be positioned to avoid the location of the first virtual object. This approach recognizes that recommending the second individual with a path that avoids the first virtual object encourages the second individual to avoid the first virtual object, thereby reducing a risk of apparent spatial conflict between the first virtual object and the second individual.

One example of a virtual path overlay is a virtual route or path for the user to take, e.g., indicating the precise route to take from a current location of the second individual to another location.

Another example of a virtual path overlay is an identification of an end goal or location for the second individual (e.g., highlighting a chair for the second individual or another location to which the second individual may travel).

Of course, both of these examples could be used at the same time.

The virtual path overlay may also and/or otherwise be or provide a visual indication of one or more potential paths or routes for the second individual that should be avoided by the second individual.

A path/route to avoid may be indicated using a different visual indicator to path/route for the individual to take, e.g., using different colors.

In this way, the second individual may be guided as to suitable routes or paths that can be taken to avoid spatial overlap with an apparent position or location of the first virtual object.

The previously described embodiments for step 231 make use of a second virtual object, provided to the user via a user interface, to provide a user-perceptible feedback. However, this is not essential.

By way of example, step 231 may comprise providing an audible output (e.g., via a speaker) to the second individual. For instance, step 231 may comprise processing the first virtual object information and the second individual information to determine a proximity of the second individual to the first virtual object; and controlling an audible output for the second individual responsive to the determined proximity. For instance, the audible output may increase in magnitude, frequency and/or change its pattern as the second individual gets closer to the position of the first virtual object.

This provides the second individual with an alternative mechanism for identifying the location of the first virtual object, thereby reducing a risk that the second individual will occupy a same space as the first virtual object.

The audible output may be replaced by a visual output (e.g., a flashing light) or a haptic output (e.g., a vibration).

An embodiment for performing step 232 is hereafter described.

In particular, step 232 may comprise controlling the location of the first virtual object to avoid the location or one or more expected locations of the second individual. This approach reduces the likelihood of the second individual interacting or occupying a same space as the first virtual object by moving the first virtual object out of the way of the second individual. This significantly reduces a risk of an apparent clash between the first virtual object and the second individual.

In some examples, the method 200 further comprises a step 240 comprising obtaining first individual information defining at least a location and/or one or more expected locations of the first individual.

In such examples, step 232 may comprise defining the location of the first virtual object to avoid any location between the location and/or one or more expected locations of the first individual and the location and/or one or more expected locations of the second individual. In this way, a line of sight from the first individual to the second individual can be maintained or uninterrupted.

In examples in which step 240 and step 231 are performed, step 231 may comprise defining a location of the second virtual object to avoid any location between the location and/or one or more expected locations of the first individual and the location and/or one or more expected locations of the second individual. This approach ensures that a line of sight from the second individual to the first individual can be maintained or uninterrupted.

In some examples, the method 200 further comprises a step 245 of obtaining third virtual object information defining the location of a third virtual object visible to the first individual via the first user interface and to the second individual via the second user interface.

Thus, the third virtual object may be a virtual object shared between both the first and the second individuals.

When steps 245 and 232 are performed, step 232 may comprise defining the position of the first virtual object to avoid the position of the third virtual object.

Similarly, when steps 245 and 231 are performed, and step 231 comprises defining a location of a second virtual object, step 231 may comprise defining the location or position of the second virtual object to avoid the location of the third virtual object. In this way, the step of controlling, via a second user interface, a user-perceptible output may be further responsive to the third virtual object information.

Previously described embodiments may make use of one or more expected locations of the second individual, e.g., for placement or positioning of a first virtual object or second virtual object and/or to determine whether or not to provide a second virtual object.

The method 200 may accordingly comprise a step 250 of determining one or more expected locations of the second individual.

In one approach, step 250 comprises identifying one or more expected locations of the second individual by processing at least the environment model. Each expected location may be an area of the environment model that represents an area of the real environment that the second individual is likely to occupy.

Step 250 recognizes that an individual will only be able (or likely) to access or occupy certain areas of the environment. Other areas of the environment may be out of reach of the individual or are unlikely to be visited or occupied by the individual. The environment model can be used to define the areas that an individual is likely to approach or reach.

In a simple example, step 250 may simply assume that the second individual is likely to physically explore or attempt to interact with all free reachable space within the environment. Thus, step 241 may comprise processing the environment model to identify, as expected locations, any areas sized and/or located such that the second individual is able to approach and explore the areas, thereby risking interaction with objects in said areas.

In more advanced embodiments, further information about the second individual may be used in the identification of the expected location. Thus, the second individual information obtained in step 220 may comprise additional information about the individual that is usable for identifying the expected location(s) in step 250.

The following description provides a number of examples of suitable data types and information that can be used to improve the accuracy of identifying the expected location(s) of the environment model. This data may, for instance, be obtained from one or more sensors, circuitry and/or memory storage devices.

As an example, information about the dimensions of the second individual may be used to assess the areas of the environment that are accessible by the second individual (e.g., taller individuals such as adults will be able to access taller locations than smaller individuals such as children). As another example, a reach distance of the individual may be used to help define areas that can be reached by the individual as expected locations.

In some examples, a posture of the second individual is used to identify expected locations. Changes in the posture of a second individual indicate changes in the likelihood that the second individual will approach or interact with an accessible area. For instance, a standing individual is more likely to investigate an accessible area than a seated individual. Thus, information indicative of a posture of the second individual(s) is usable to identify expected locations with greater accuracy.

A posture of the individual may also be used to identify a direction or intended direction of movement of the individual, which can be used to identify expected locations of the individual.

Approaches and systems for analyzing a posture of an individual are known in the art, e.g., employing one or cameras for taking a picture or video of the individual and a processor that makes of image-processing algorithms to identify the posture(s) of the individuals. Another system determines a posture of an individual based on a response of an accelerometer or the like carried by the individual.

In some examples, an eye gaze of the second individual is used in the identification of any expected location(s). A user is more likely to attempt approaching an area if they are looking or gazing at said area. Thus, information on an eye gaze of the second individual improves an accuracy of identifying any expected locations.

Approaches for tracking an eye gaze of an individual are well established in the art, and could be employed in embodiments of the invention. Approaches for mapping an eye gaze of an individual to a model-space are also well established, and could be used in the identification of the expected location(s).

In some examples, a role or function of the second individual is used in the identification of the expected location(s). It is appreciated that, for a particular environment, different types of individual will perform different actions, thereby defining the likely expected location(s) for that individual. By way of example, a cleaner is likely to access all accessible areas of the environment, meaning that any accessible area is an expected location. By contrast, a clinician in a clinical environment is likely to access only certain areas (e.g., an area around a patient or near a patient monitoring device). Thus, an accuracy of identifying the expected locations can be improved by making use of the type or role of the individual.

In some examples, activity or task information of the second individual is used in the identification of the expected location(s). The second individual may be associated with activity/task information that identifies an expected task or activity of the individual in the environment. The task/activity performed by the individual will affect where the individual is likely to move in the environment, and therefore the expected locations.

It is therefore possible to perform prediction of the second indivdals movements based on activity/task information, e.g., based on past observations of tasks or activities (e.g., the movement for the activity/task) of the individal within the environment or from pre-defined protocols mapped in space.

By way of working example, a surgeon will operate in a restricted space around the patient; a nurse in a surgical theater has a certain set of positions and paths; an intensivist examines certain parts of the patient, looks at the monitor, and stands in a certain area of the room when talking.

Task/activity information may be obtained, for instance, from a calendar of the individual (e.g., stored in a memory or storage unit).

In some examples, a distance between the location of the second individual and a plurality of potential expected locations is used to identify the expected locations. For instance, expected locations may be identified as being areas of the environment model that are within a predetermined distance of the location of the second individual. This approach recognizes that an individual is more likely to engage with an area the closer they are to the area. Distances can be determined using an environment model, e.g., which accurately maps the space of the environment.

In some examples, one or more user-indicated locations are used in the determination of the expected location(s). For instance, a user may be able to indicate (e.g., using their voice) an intended target area that they are headed towards. This information can be used to identify the corresponding area of the environment model (that represents the indicated area) as an expected location. The user indication may be provided in the form of a speech or gesture. Speech or gesture(s) can be processed using appropriate recognition approaches to identify an indicated area to which the user is headed.

In some examples, the past or historic actions of the individual in the same or similar environment can be used in the identification of the expected location(s). In particular, if an individual has previously visited the same environment, then the expected location(s) may represent the area(s) previously visited by the individual.

A combination of the above-described approaches could be used to identify the expected location(s) of the second individual.

Any of the above-identified types of information about the individual may be contained in the individual information obtained in step 220.

The skilled person would be readily capable of developing a processing system for carrying out any herein described method. Thus, each step of the flow chart may represent a different action performed by a processing system, and may be performed by a respective module of the processing system.

The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Ordinal numbers (e.g. "first", "second" and so on) have been used purely to distinguish different elements from one another for the sake of clarity, and reference to a non-"first" (e.g. "second" or "third") element does not necessitate that a "first" element be present. The skilled person would be capable of relabeling any such elements as appropriate (e.g. relabeling a "second" element as a "first" element if only the second element is present).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method for mitigating an apparent spatial conflict between a first virtual object, which is visible to a first individual via a first user interface, and a second individual, the computer-implemented method comprising:
obtaining first virtual object information defining the location of the first virtual object; and
obtaining second individual information defining at least a location and/or one or more expected locations of the second individual; and
performing a conflict mitigation process comprising:
controlling, via a second user interface, a user-perceptible output for the second individual responsive to the first virtual object information and the second individual information; and/or
defining the location of the first virtual object responsive to the first virtual object information and the second individual information.

2. The computer-implemented method of claim 1, further comprising a step of obtaining an environment model, being a virtual representation of the real environment, wherein:
the first virtual object information defines the location of the first virtual object with respect to the environment model; and
the second individual information defines the location and/or the one or more expected locations of the second individual with respect to the environment model.

3. The computer-implemented method of claim 1 or 2, wherein the step of controlling a user-perceptible output comprises controlling or defining the location of a second virtual object, visible to the second individual via the second user interface, responsive to the first virtual object information and the second individual information.

4. The computer-implemented method of claim 3, wherein the step of controlling the user-perceptible output comprises:
controlling a location of the second virtual object to be positioned at or above the location of the first virtual object; and/or
controlling a location of the second virtual object to be positioned between the location of the first virtual object and the location and/or one or more expected locations of the second individual.

5. The computer-implemented method of claim 3 or 4, further comprising:
obtaining privacy information defining whether or not the second individual is permitted to view the first virtual object; and
responsive to the privacy information indicating that the second individual is not permitted to view the first virtual object, preventing the second virtual object from having the appearance of the first virtual object.

6. The computer-implemented method of any of claims 1 to 5, wherein the step of controlling a user-perceptible output comprises controlling or defining the position of a virtual path overlay visible to the second individual via the second user interface responsive to the first virtual object information and the second individual information.

7. The computer-implemented method of claim 6, wherein the step of controlling the user-perceptible output comprises controlling a location of the virtual path overlay to be positioned to avoid the location of the first virtual object.

8. The computer-implemented method of any of claims 1 to 7, wherein the step of defining the location of the first virtual object comprises controlling the location of the first virtual object to avoid the location or one or more expected locations of the second individual.

9. The computer-implemented method of claims 1 to 8, wherein the second individual information comprises the location of the second individual, and the step of defining the location of the first virtual object comprises:
processing the location of the second individual to determine an expected path of the second individual; and
controlling the location of the first virtual object to avoid the expected path of the second individual.

10. The computer-implemented method of any of claims 1 to 9, further comprising obtaining first individual information defining at least a location and/or one or more expected locations of the first individual,
wherein the step of defining the location of the first virtual object comprises defining the location of the first virtual object to avoid any location between the location and/or one or more expected locations of the first individual and the location and/or one or more expected locations of the second individual.

11. The computer-implemented method of any of claims 1 to 10, further comprising obtaining third virtual object information defining the location of a third virtual object visible to the first individual via the first user interface and to the second individual via the second user interface, wherein:
the step of defining the location of the first virtual object further comprises defining the location of the first virtual object to avoid the location of the third virtual object; and/or
the step of controlling, via a second user interface, a user-perceptible output is further responsive to the third virtual object information.

12. The computer-implemented method of any of claims 1 to 11, wherein the step of controlling a user-perceptible output for the second individual comprises:
processing the first virtual object information and the second individual information to determine a proximity of the second individual to the first virtual object; and
controlling a user-perceptible output for the second individual responsive to the determined proximity.

13. A computer program product comprising computer program code means which, when executed on a computing device having a processing system, cause the processing system to perform all of the steps of the method according to any of claims 1 to 12.

14. A processing system for mitigating an apparent spatial conflict between a first virtual object, which is visible to a first individual via a first user interface, and a second individual, the processing system being configured to:
obtain first virtual object information defining the location of the first virtual object; and
obtain second individual information defining at least a location and/or one or more expected locations of the second individual; and
perform a conflict mitigation process comprising:
controlling, via a second user interface, a user-perceptible output for the second individual responsive to the first virtual object information and the second individual information; and/or
defining the location of the first virtual object responsive to the first virtual object information and the second individual information.

15. A user interface system comprising:
the processing system of claim 14;
the first user interface; and
the second user interface.
